# FASCICULE DE BREVET EUROPEEN

(11) **EP 0 704 136 B1**
(45) Date de publication et mention de la délivrance du brevet: **07.11.2001**
(21) Numéro de dépôt: 95918024.1
(22) Date de dépôt: 18.04.1995
(51) Int. Cl.: H04N 7/171

(54) **PROCEDE ET DISPOSITIF DE CALAGE POUR TRAITEMENT DE SIGNAUX VIDEO A L'EMISSION**
EINSTELLUNGSVERFAHREN UND VORRICHTUNG ZUR BEARBEITUNG VON VIDEOSIGNALEN IN EINEM SENDER
CLAMPING METHOD AND DEVICE FOR TRANSMITTED VIDEO SIGNAL PROCESSING

(30) Priorité: 19.04.1994 FR 9404638
(43) Date de publication de la demande: 03.04.1996
(73) Titulaire: THOMSON CSF, 75008 Paris (FR)
(72) Inventeur: CHAPEL, Claude, F-92402 Courbevoie Cédex (FR)
(74) Mandataire: Ruellan-Lemonnier, Brigitte
(86) Numéro de dépôt international: FR9500506
(87) Numéro de publication internationale: WO9528805

(56) Documents cités:
- EP-A- 0 449 633
- WO-A-91/14341
- GB-A- 2 246 262

## Description

L'invention se rapporte au domaine de la télévision et concerne un procédé et dispositif de calage pour un traitement de signaux vidéo à l'émission.

Elle concerne plus particulièrement le calage, relativement au signal de synchronisation ligne, de signaux d'échantillonnage et de signaux temporels nécessaires à la numérisation et au traitement du signal vidéo composite réalisés dans un système de télévision. Ce traitement numérique est, par exemple, un embrouillage du signal vidéo composite pour une transmission du signal embrouillé afin de réaliser un système de télévision à accès conditionnel.

Les circuits de traitement numérique de signaux vidéo, à l'émission, qui sont des équipements professionnels qui exigent une grande stabilité des signaux de synchronisation, exploitent habituellement le front descendant de l'impulsion de synchronisation horizontale du signal vidéo composite ou synchro ligne. Or les dispositifs de récupération de synchro ligne des récepteurs grand public, dans le but d'une meilleure résistance aux perturbations du signal transmis, notamment au bruit, réalisent quant à eux une intégration de l'impulsion pour en extraire une référence temporelle dans l'impulsion de synchronisation, généralement le milieu de l'impulsion. La référence utilisée par les circuits de traitement numérique à l'émission, le front descendant de la synchro ligne, est ainsi perdue à la réception.

Une réception de bonne qualité, lorsqu'un traitement numérique tel que celui mentionné plus haut est effectué à l'émission sur les signaux vidéo, nécessite généralement une précision au point près, c'est-à-dire au pixel près, des signaux temporels cadençant ce traitement et utilisés à l'émission et à la réception. C'est par exemple le cas pour un codage à coupure de ligne et rotation, désigné sous l'appellation Anglo Saxonne "Line cut and rotate" qui consiste à générer d'une manière aléatoire un point de coupure à chaque ligne de vidéo active, les 2 segments ainsi créés étant ensuite inversés : le point de coupure doit être référencé au point près pour que le décodeur puisse reconstituer une image de qualité à la réception.

Or, l'utilisation de circuits de synchronisation ou de retard classiques ne permet pas d'effectuer, d'une manière simple et souple, un calage de la sychronisation ligne à l'émission sur celle en réception tout en conservant une précision au pixel près des signaux temporels par rapport à cette nouvelle synchronisation.

Une solution consistant en l'utilisation de circuits de récupération de synchro de type ceux des récepteurs n'est pas satisfaisante. En effet, la gigue ou "jitter" du signal de synchronisation obtenu en sortie de ces circuits du fait même de leur conception, tout à fait admissible par les récepteurs, ne permet pas, à l'émission, d'effectuer un traitement des signaux vidéo avec suffisamment de précision pour ne pas entacher la qualité des informations transmises; c'est par exemple le problème de rotation de phase de la sous- porteuse couleur dû à des jitters même inférieurs à une vingtaine de nanosecondes.

D'autre part, du fait que la largeur de l'impulsion de synchronisation est variable d'un équipement amont à l'autre, les tolérances sont spécifiées par les normes, le signal de synchronisation extrait par les circuits de réception a une position différente par rapport au front descendant de l'impulsion de synchronisation selon l'équipement amont utilisé. Le calage du signal de synchro dans les circuits d'émission doit ainsi être spécifique à chaque installation, augmentant le coût de mise en service et de maintenance de celle-ci du fait de cette non interchangeabilité.

Dans la demande internationale publiée sous le numéro WO 91/14341 décrivant un embrouilleur pour signaux de télévision, une boucle à verrouillage de phase assure la synchronisation du signal échantillonné à transmettre, sur l'impulsion de synchronisation ligne.

Cet asservissement ne permet pas de réaliser, de manière simple, un calage temporel du signal échantillonné, par exemple en fonction de caractéristiques de l'impulsion de synchronisation d'un équipement branché sur l'embrouilleur.

L'invention a pour but de pallier les inconvénients précités.

Elle a pour objet un dispositif de calage de signaux d'horloge et de signaux temporels de synchronisation par rapport à un signal de synchronisation ligne pour traitement de signaux vidéo à l'émission, caractérisé en ce qu'il comprend :
- un séparateur de synchro pour extraire le signal de synchronisation ligne,
- un comparateur de phase pour comparer la phase du front descendant de l'impulsion de synchro ligne provenant du séparateur de synchro avec celle d'un signal de comparaison,
- un oscillateur contrôlé en tension qui fournit une fréquence d'horloge H fonction de la tension provenant de la sortie du comparateur de phase,
- un compteur recevant l'horloge H,
- un premier circuit de décodage décodant une valeur N en sortie du compteur pour fournir le signal de comparaison, la valeur N étant déterminée en fonction du calage souhaité,
- un deuxième circuit de décodage fixe branché également en sortie du compteur pour fournir les signaux de remise à zéro du compteur et les signaux temporels nécessaires au traitement des signaux vidéo.

L'invention a pour principal avantage qu'elle permet d'une manière simple et souple un calage précis des signaux d'échantillonnage et des signaux temporels nécessaires au traitement à l'émission par rapport au signal de synchronisation obtenu par les circuits d'extraction intégrés dans les récepteurs de type grand public. Il est ainsi possible d'obtenir une image de qualité comparable à celle d'une image de télévision standard c'est-à-dire non traitée à l'émission, par exemple non embrouillée.

Par calcul automatique d'une position prédéfinie dans l'impulsion de synchronisation, une variante de l'invention permet un calage automatique adapté aux récepteurs grand public, c'est-à-dire sans reprise de réglage fonction de l'équipement amont délivrant les signaux vidéo composites. La mise en service des équipements en est ainsi simplifiée.

Une seconde variante de l'invention consiste à substituer à l'impulsion de synchro ligne, une impulsion synthétique permettant, comme pour la première variante, de s'affranchir de nouveaux réglages lors de remplacement d'équipements amont. Elle permet également de s'affranchir du "jitter" éventuel sur la largeur de l'impulsion de synchronisation qui peut détériorer la qualité de l'image s'il est important. D'autre part, lorsque des équipements d'émission aval tels que modulateur HF, synchroniseur, correcteur de base de temps, modifient les caractéristiques de cette impulsion de synchronisation ligne d'une manière constante, par exemple sa largeur, une correction peut être effectuée par le procédé pour annihiler ce défaut et rendre cette dégradation de signal sans conséquence sur la qualité de l'image reçue.

Les caractéristiques et avantages de la présente invention ressortiront mieux de la description suivante, donnée à titre d'exemple et en référence aux figures qui représentent :
- la figure 1, un schéma d'un dispositif de calage automatique,
- la figure 2 un schéma d'un dispositif de calage avec substitution de l'impulsion de synchronisation.

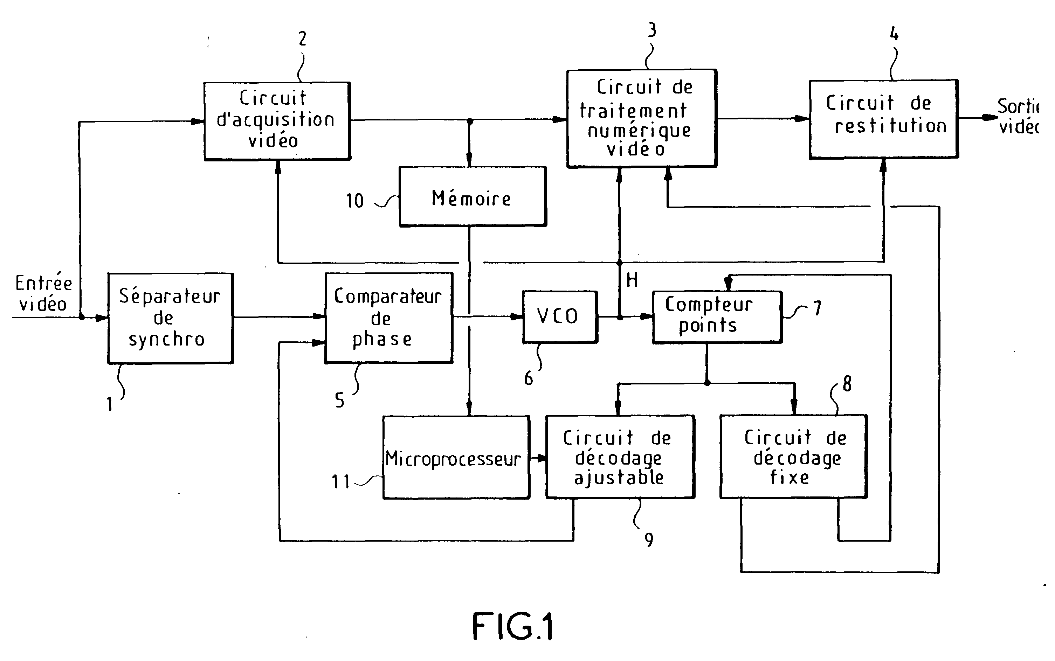

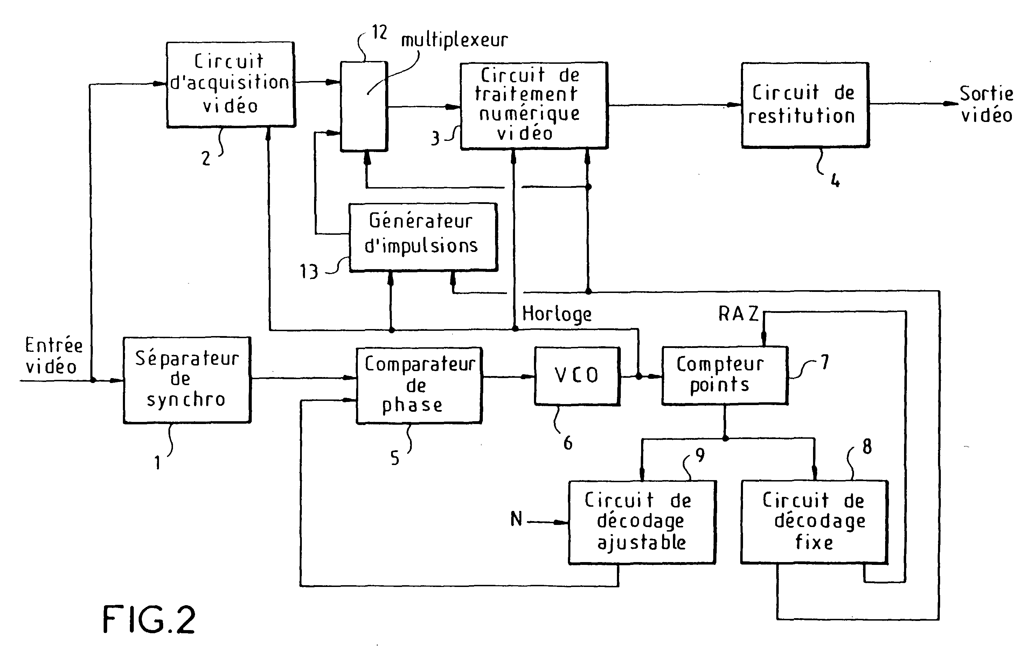

Le procédé selon l'invention est décrit ci-après à l'aide du schéma des dispositifs représentés en figures 1 et 2.

La figure 1 représente un dispositif de calage automatique intégré dans une chaîne de traitement numérique du signal vidéo.

Le signal vidéo composite analogique présenté à l'entrée du dispositif est transmis simultanément d'une part à un circuit séparateur de synchro 1 qui fournit en sortie un signal synchronisé sur le front descendant de l'impulsion de synchronisation présente dans le signal vidéo composite et d'autre part à un circuit d'acquisition vidéo 2 qui réalise la conversion analogique numérique du signal vidéo synchronisée sur un signal d'horloge H ou signal d'échantillonnage provenant du dispositif, ce signal étant lui-même synchronisé sur la fréquence ligne comme indiqué plus loin. Ce circuit d'acquisition vidéo est relié à un circuit de traitement numérique vidéo 3, par exemple un embrouilleur de type "line cut and rotate" et à une mémoire décrite plus loin. Ce circuit de traitement numérique vidéo 3 est cadencé par le signal d'horloge H, horloge système qui commande donc le traitement vidéo et par des signaux temporels synchrones de cette horloge et calés à des instants précis, définis par le circuit selon l'invention, par rapport au signal de synchronisation.

La sortie codée numérique du circuit de traitement numérique vidéo 3 est transmise à un circuit de restitution 4 pour transformer la vidéo reçue en un signal analogique, circuit également synchronisé par le signal d'horloge H du dispositif. La sortie du circuit de restitution est un signal vidéo analogique embrouillé. C'est ce signal vidéo qui est transmis, par l'intermédiaire de l'émetteur proprement dit aux récepteurs grand public, par voie hertzienne, coaxiale ou optique. Les circuits 2, 3 et 4 constituent la chaîne de traitement numérique du signal vidéo.

Un comparateur de phase 5 reçoit sur une entrée le signal transmis par le séparateur de synchro 1 et sur une deuxième entrée un signal de comparaison. Il exploite la différence de phase entre le front descendant de l'impulsion de synchronisation et celui de l'impulsion de comparaison pour fournir en sortie un signal d'erreur continu, d'amplitude proportionnelle à cette différence de phase. Ce signal va piloter un oscillateur pour commander la fréquence de l'horloge H. En effet, cette sortie est reliée à l'entrée d'un oscillateur commandé en tension ou VCO de l'appellation Anglo-Saxonne 'Voltage Controlled Oscillator" 6. La sortie du VCO correspond à l'horloge système H du dispositif et alimente, entre autres, le circuit d'acquisition vidéo 2, le circuit de traitement numérique vidéo 3, le circuit de restitution 4. Cette sortie attaque l'entrée d'horloge d'un compteur 7 que l'on appellera "compteur points" car l'unité de comptage correspond à la durée de balayage d'un point d'image. La sortie du compteur est transmise simultanément à un circuit de décodage fixe 8 et à un circuit de décodage ajustable 9.

Le circuit de décodage fixe 8 va décoder, pour une première sortie, une valeur M correspondant à la durée d'une ligne, c'est-à-dire égale à la fréquence nominale de l'horloge H multipliée par la durée ligne. Cette première sortie transmet une impulsion sur l'entrée "remise à zéro" du compteur 7 lorsque la valeur M est détectée à la sortie du compteur 7. Le compteur point a donc un cycle correspondant à la fréquence ligne. Des sorties supplémentaires du circuit de décodage 8 sont reliées au circuit de traitement numérique vidéo 3 pour transmettre des signaux temporels qui sont des signaux de cadencement du traitement numérique. Les valeurs décodées correspondent aux besoins spécifiques de ce circuit. Dans le cas du standard français 625 lignes, l'horloge H est par exemple à la fréquence de 14 MHz et M a une valeur de 896 correspondant à la durée de ligne de 64 µs. Le circuit de décodage fixe est donc construit de manière à fournir sur ses différentes sorties d'une part une impulsion pour ce nombre M et d'autre part des impulsions pour d'autres nombres prédéterminés utiles pour le cadencement du circuit de traitement numérique vidéo 3.

Le circuit de décodage ajustable 9 va décoder une valeur N correspondant au calage souhaité en référence au front descendant de l'impulsion de synchronisation. La sortie du circuit fournit alors une impulsion de comparaison lorsque le compteur atteint le contenu N. Cette impulsion est transmise à la deuxième entrée du comparateur de phase. Les circuits 5, 6, 7, 9 représentent un schéma de PLL ou boucle à verrouillage de phase. A la mise sous tension, une période transitoire va permettre à l'impulsion de comparaison de se verrouiller sur le front descendant de l'impulsion de synchro ligne par variation de la fréquence d'horloge.

La boucle PLL va caler le démarrage du compteur 7 à un instant tel que le compteur atteigne le contenu N au front descendant de l'impulsion de synchronisation de ligne. Les différentes sorties au circuit de décodage fixe fournissent alors des impulsions à des instants qui dépendent du réglage de N. Ce sont ces sorties qui servent à cadencer le circuit de traitement numérique vidéo 3, le cadencement étant donc fonction de la valeur choisie pour N.

La valeur de décodage N est calculée par un microprocesseur 11 à partir d'une mémorisation de l'impulsion de synchronisation. A cet effet, la sortie du circuit d'acquisition 2 est également reliée à une mémoire 10 qui va enregistrer le profil de l'impulsion de synchronisation numérisée. La sortie de la mémoire, de type FIFO, est reliée à une entrée d'un microprocesseur 11 qui va en déduire une valeur N à décoder qu'il transmet au circuit de décodage ajustable 9. Cette valeur N est définie par le logiciel du microprocesseur; elle doit être choisie en fonction des installations de réception de télévision et elle correspond à la référence de synchronisation des circuits de réception par rapport au front descendant et à la largeur de l'impulsion de synchronisation. Ainsi dans le cas des récepteurs grand public, le point de référence des circuits de désembrouillage correspond généralement au milieu de l'impulsion : la valeur de N représente alors la fréquence horloge multipliée par la durée de ligne moins la moitié de la durée de l'impulsion de synchro. Cette impulsion est fournie par l'équipement amont qui produit le signal vidéo composite et est donc fonction des équipements amonts reliés au dispositif.

Cette valeur est généralement constante pour un équipement amont donné et il est ainsi tout aussi envisageable de réaliser un dispositif simplifié comportant, à la place de la mémoire et du microprocesseur, un circuit de sélection manuel de la valeur de décodage N, par exemple de type interrupteurs miniatures, simplement relié au circuit de décodage ajustable. Ce circuit est alors réglé en fonction de l'équipement amont sur lequel est branché le dispositif mais ce dernier n'est alors plus interchangeable d'un équipement à l'autre sans reprise de réglage.

D'une manière générale, cette valeur N peut être déterminée lors d'essais au niveau d'un système global, générateur vidéo, émetteur, récepteur, par visualisation de l'image en réception ou, plus précisément, à partir d'une mesure de différence de phase effectuée par des circuits de mesure en réception, généralement intégrés aux circuits de traitement tels que décodeurs, visualisant par exemple cette valeur sur l'écran, sur demande. Cette mesure est généralement effectuée à partir des données transmises lors du retour de trame.

Une variante du dispositif est représentée en figure 2 et réalise une substitution de l'impulsion de synchro ligne par une impulsion synthétique. Cette variante reprend partiellement le dispositif décrit en figure 1 et les parties communes ne sont pas décrites à nouveau.

La sortie du circuit d'acquisition vidéo 2 traverse ici un circuit de multiplexage 12 avant d'être reliée au circuit de traitement numérique vidéo 3. Le circuit de multiplexage 12 est actionné par des signaux de commande temporels provenant du circuit de décodage 8. Autour de la durée du signal de synchro ligne, et pour une valeur au moins égale, le multiplexeur est commuté, non plus sur la sortie du circuit d'acquisition vidéo 2 mais sur la sortie d'un générateur d'impulsion 13 qui vient donc substituer à la synchro ligne, sous forme de codage numérique de niveaux, une impulsion de caractéristiques connues et figées. Ce générateur d'impulsion 13 reçoit l'horloge H provenant du VCO 6 et des signaux temporels issus du circuit de décodage fixe 8. L'impulsion de synchronisation réelle est ainsi remplacée par une impulsion synthétique dont la largeur peut être corrigée, le cas échéant, de l'altération entraînée sur cette impulsion par la chaîne de transmission en aval du dispositif. Cette impulsion est débutée et terminée à des instants définis par deux contenus du compteur 7 dont le démarrage est, comme à la figure 1, déterminé en fonction du réglage du décodeur ajustable 9.

Ce dispositif est aussi particulièrement adapté à des équipements amont fournissant des signaux de synchronisation en dehors des normes ou affectés d'une variation importante en largeur.

La valeur de décodage N du circuit de décodage ajustable 9 est ici indépendante des équipements amonts utilisés ; elle est par exemple ajustée lors de la mise au point des circuits du dispositif. Après cet ajustage, cette valeur reste fixe.

## Revendications

1. Dispositif de calage de signaux d'horloge et de signaux temporels de synchronisation par rapport à un signal de synchronisation ligne pour traitement (3) de signaux vidéo à l'émission, comprenant:
- un séparateur de synchro (1) pour extraire le signal de synchronisation ligne,
- un comparateur de phase (5) pour comparer la phase du front descendant de l'impulsion de synchro ligne provenant du séparateur de synchro (1) avec celle d'un signal de comparaison,
- un oscillateur contrôlé en tension (6) qui fournit une fréquence d'horloge H fonction de la tension provenant de la sortie du comparateur de phase (5),
- un compteur (7) recevant l'horloge H,
- un premier circuit de décodage (9) décodant une valeur N en sortie du compteur (7) pour fournir le signal de comparaison, la valeur N étant déterminée en fonction du calage souhaité,
- un deuxième circuit de décodage fixe (8) branché également en sortie du compteur (7) pour fournir les signaux de remise à zéro du compteur et les signaux temporels nécessaires au traitement des signaux vidéo.

2. Dispositif selon la revendication 1, **caractérisé en ce que** le premier circuit de décodage (9) est ajustable.

3. Dispositif selon la revendication 2, **caractérisé en ce qu'**il comporte une mémoire (10) branchée en sortie d'un circuit d'acquisition vidéo (2) réalisant la numérisation du signal vidéo pour mémoriser le profil de l'impulsion de synchro, un circuit de calcul (11) recevant ces caractéristiques de l'impulsion pour calculer une valeur N à partir de ces caractéristiques en fonction d'un point de référence temporelle désiré à l'intérieur de l'impulsion de synchronisation.

4. Dispositif selon la revendication 3, **caractérisé en ce que** le point de référence désiré est défini par rapport à des installations de réception du signal vidéo émis et est constitué par la référence de synchro ligne de ces installations

5. Dispositif selon l'une des revendications 1 ou 2, **caractérisé en ce qu'**un multiplexeur (12) est inséré entre le circuit d'acquisition vidéo (2) réalisant la numérisation du signal vidéo et le circuit de traitement numérique vidéo (3) pour substituer sous forme numérique, à l'impulsion de synchronisation ligne, une impulsion de synchronisation synthétique de largeur fixe fournie par un générateur d'impulsion (13) synchronisé sur les signaux d'horloge et signaux temporels.

6. Dispositif selon la revendication 5, **caractérisé en ce que** la valeur de N est choisie de manière que, lorsque le signal de comparaison est synchronisé sur l'impulsion de synchronisation ligne, le compteur (7) est remis à zéro à un point de référence déterminé à l'intérieur de l'impulsion de synchronisation synthétique, notamment le milieu de cette impulsion.

7. Dispositif selon l'une des revendications précédentes, **caractérisé en ce que** le traitement de signaux de télévision est un embrouillage de ces signaux.

## Claims

1. Device for aligning clock signals and time signals relatively to a line synchronization signal for processing (3) video signals to be transmitted, comprising:
- a sync separator (1) for extracting the line synchronization signal,
- a phase comparator (5) for comparing the phase of the falling edge of the line synchronization signal originating from the sync separator (1) with that of a comparison signal,
- a voltage-controlled oscillator (6) which provides a clock frequency H as a function of the voltage originating from the output of the phase comparator (5),
- a counter (7) receiving the clock H,
- a first decoding circuit (9), decoding a value N at the output of the counter (7) in order to provide the comparison signal, the value N being determined as a function of the desired alignment,
- a second fixed decoding circuit (8) also wired to the output of the counter (7) in order to provide signals for rezeroing the counter and to provide the time signals required for the processing of the video signals.

2. Device according to claim 1, **characterized in that** the first decoding circuit (9) is adjustable.

3. Device according to claim 2, **characterized in that** it comprises a memory (10) wired to the output of a video acquisition circuit (2) carrying out the digitisation of the video signal to memorize the synchro pulse profile, a processing circuit (11) receiving these pulse characteristics to calculate a value N from these characteristics as a function of a desired temporal reference point inside the synchronisation pulse.

4. Device according to claim 3, **characterised in that** the desired reference point is defined according to installations receiving the transmitted video signal and is constituted by the synchro line reference of these installations.

5. Device according to claim 1 or 2, wherein a multiplexer (12) is inserted between the video acquisition circuit (2) carrying out the digitisation of the video signal and the video processing circuit (3) in order to substitute, in digital form, the line synchronization signal by a synthetic synchronization pulse of fixed width provided by a pulse generator (13) synchronised on the clock signals and temporal signals.

6. Device according to claim 5, **characterised in that** the value N is chosen in such a way that, when the comparison signal is synchronized with the line synchronization signal, the counter (7) is rezeroed to a specified reference point inside the synthetic synchronization pulse, in particular the middle of the pulse.

7. Device according to one of the previous claims, **characterised in that** the processing of TV signals is a scrambling of these signals.

## Patentansprüche

1. Vorrichtung zur Einstellung von Taktsignalen und Synchronisiersignalen relativ zu einem Zeilensynchronsignal für die Verarbeitung (3) von Videosignalen bei einer Übertragung mit:
- einer Synchronabtrennstufe (1) zum Extrahieren des Zeilensynchronsignals,
- einem Phasenkomparator (5) zum Vergleichen der Phase der abfallenden Flanke des Zeilensychronimpulses von der Synchronabtrennstufe (1) mit der eines Vergleichssignals,
- einem spannungsgesteuerten Oszillator (6) für ein Taktsignal H mit einer Frequenz, die von der Spannung von Ausgang des Phasenkomparators (5) abhängig ist,
- einem das Taktsignal H empfangenden Zähler (7),
- einer ersten Dekodierschaltung (9), die einen Wert N am Ausgang des Zählers (7) dekodiert, um das Vergleichssignal zu liefern, wobei der Wert N in Abhängigkeit von der gewünschten Einstellung bestimmt ist,
- einer zweiten, festen Dekodierschaltung (8), die ebenfalls an den Ausgang des Zählers (7) angeschlossen ist, um die Signale zum Rücksetzen auf Null des Zählers und die Zeitsignale oder Synchronsignale zu liefern, die für die Verarbeitung der Videosignale benötigt werden.

2. Vorrichtung nach Anspruch 1, **dadurch gekennzeichnet, daß** die erste Dekodierschaltung (9) einstellbar ist.

3. Vorrichtung nach Anspruch 2, **dadurch gekennzeichnet, daß** sie einen Speicher (10), der mit dem Ausgang einer Video-Erfassungsschaltung (2) verbunden ist, die die Digitalisierung des Videosignals bewirkt, um die Form des Synchronimpulses zu speichern, eine Berechnungsschaltung (11), die die Eigenschaften des Impulses empfängt, um aus diesen Eigenschaften einen Wert N in Abhängigkeit von einem zeitlichen Referenzpunkt zu berechnen, enthält, der innerhalb des Synchronimpulses gewünscht ist.

4. Vorrichtung nach Anspruch 3, **dadurch gekennzeichnet, daß** der gewünschte Referenzpunkt in Bezug auf die Empfangsausrüstungen für das übertragene Videosignal bestimmt und durch die Referenz des Zeilen-Sync dieser Ausrüstungen gebildet ist.

5. Vorrichtung nach Anspruch 1 oder 2, **dadurch gekennzeichnet, daß** ein Multiplexer (12) zwischen der Video-Erfassungsschaltung (2), die die Digitalisierung des Videosignals bewirkt, und der Schaltung (3) für die Bearbeitung des digitalen Videosignals eingefügt ist, um einen ZeilenSynchronimpuls in digitaler Form durch einen synthetischen Synchronimpuls mit fester Breite zu ersetzen, der durch einen Impulsgenerator (13) geliefert wird, der durch die Taktsignale und die Zeitsignale synchronisiert ist.

6. Vorrichtung nach Anspruch 5, **dadurch gekennzeichnet, daß** der Wert von N derart gewählt ist, daß dann, wenn das Vergleichssignal mit dem Zeilensynchronimpuls synchronisiert ist, der Zähler (7) bei einem Referenzpunkt auf null zurückgesetzt wird, der innerhalb des synthetischen Synchronimpulses, insbesondere in der Mitte dieses Impulses, bestimmt ist.

7. Vorrichtung nach einem der vorangehenden Ansprüche, **dadurch gekennzeichnet, daß** die Verarbeitung der Fernsehsignale eine Verwürfelung dieser Signale ist.
